# EUROPEAN PATENT APPLICATION

(11) **EP 3 960 371 A1**
(43) Date of publication of application: **02.03.2022**
(21) Application number: 20193820.6
(22) Date of filing: 01.09.2020
(51) Int. Cl.: B25B 21/00

(54) **MACHINE AND METHOD FOR RUNNING A MACHINE**

(71) Applicant: Hilti Aktiengesellschaft, 9494 Schaan (LI)
(72) Inventor: Kendall, Isabel, 9470 Buchs (CH); von Monkiewitsch, Matthias, 6900 Bregenz (AT)
(74) Representative: Hilti Aktiengesellschaft Corporate Intellectual Property

(57) **Abstract**

Machine and method for performing repetitive actions. The machine comprises a motor having a shaft, a switch, and a controller providing electric current to the motor to rotationally drive the shaft, continuously determining a first physical parameter related to a motion of the motor, identifying a change of the first physical parameter, determining a first variable related to the change of the first physical parameter, continuously determining a second physical parameter related to a motion of the motor, identifying a change of the second physical parameter, determining a second variable related to the change of the second physical parameter, and recognizing an occurrence of one of the repetitive actions if the first variable is in a first prescribed range and, at the same time, the second variable is in a second prescribed range.

## Description

### TECHNICAL FIELD

Described herein are machines and methods for running the machines to perform repetitive actions. Also described are hand-held power tools for enabling repetitive workpiece penetrating actions. Typically, such hand-held tools find a widespread use in the construction industry. A typical hand-held tool as intended to be covered by the scope of the present invention includes, but is not limited to, an automatic screw driver for screwing screw fasteners into a workpiece, thereby penetrating the workpiece, such as a drywall board and/or a metal frame, with a screw fastener.

### BACKGROUND ART

Hand-held power tools are known to enable repetitive workpiece penetrating actions of a workpiece penetrating element. The tools comprise at least a machine housing including at least a motor that provides at least rotary motion to a rotary shaft. The rotary shaft, in turn, will ultimately transmit a certain torque at a certain rotational speed to a workpiece penetrating element, such as, for example, a screw fastener. A tool may also comprise a controller, for controlling the motor and continuously determining the delivered torque and rotational speed of the rotary shaft when the tool is in use.

For various reasons, it may be beneficial to be able to identify how many workpiece penetrating actions a hand-held power tool has enabled during a relevant time of use. Such a relevant time of use can be, but is not limited to, for example: the lifetime of the tool, the time after a tool has been serviced, the time that the tool was used for a particular project, etc. Although the following should not be regarded as an admission of existing solutions in the prior art, it is generally possible to identify a workpiece penetrating action by monitoring certain parameters related to the particular tool and application of the tool, and subsequently recognizing certain patterns in the detected changes to those parameters over time. If patterns of one or more monitored parameters over time correspond largely to those which are known to correspond to the event of a workpiece penetrating action, then a workpiece penetrating action may be identified. The total number of workpiece penetrating actions may then be identified by counting the number of these events. Parameters may be measured by dedicated sensors, provided at suitable locations for measuring the respective parameter. Alternatively, or additionally, parameters can be derived from information that is already available within the tool, for example within the controller for controlling the motor.

US 5,003,297 discloses a method of detecting failure to tighten screws against works and a system therefore. The system is intended to be used in an assembly line for electrical equipment and includes an electric screwdriver and an external detecting device which includes various control equipment, which is connected with wires. For assembling a workpiece, a worker fastens a number of screws in designated holes to mount various parts on a body of electrical equipment. The detecting device is capable of detecting screw fastening events. To this end, it uses information of certain parameters versus time, including a "load current".

### SUMMARY

According to a first aspect, the invention relates to a method for running a machine to perform repetitive actions, wherein the machine comprises a motor having a shaft. The method comprises:
- providing electric current to the motor to rotationally drive the shaft;
- continuously determining a first physical parameter related to a motion of the motor;
- identifying a change of the first physical parameter;
- determining a first variable related to the change of the first physical parameter;
- continuously determining a second physical parameter related to a motion of the motor;
- identifying a change of the second physical parameter;
- determining a second variable related to the change of the second physical parameter;
- recognizing an occurrence of one of the repetitive actions if the first variable is in a first prescribed range and, at the same time, the second variable is in a second prescribed range.

According to another aspect, the invention relates to a machine for performing repetitive actions. The machine comprises a motor having a shaft, a switch and a controller such as microcomputer, wherein the controller provides electric current to the motor to rotationally drive the shaft, continuously determines a first physical parameter related to a motion of the motor, identifies a change of the first physical parameter, determines a first variable related to the change of the first physical parameter, continuously determines a second physical parameter related to a motion of the motor, identifies a change of the second physical parameter, determines a second variable related to the change of the second physical parameter, and recognizes an occurrence of one of the repetitive actions if the first variable is in a first prescribed range and, at the same time, the second variable is in a second prescribed range. Considering the first and second variables at the same time enables accurate recognition of the occurrence of the one of the repetitive actions.

According to a preferred embodiment, the first physical parameter is at least one of an amperage or voltage of the electric current provided to the motor, a temperature such as a temperature of the motor, a rotational speed of the motor, a torque applied to the shaft by the motor, a position of a switch such as a trigger switch, or a combination thereof. According to another preferred embodiment, the second physical parameter is at least one of an amperage or voltage of the electric current provided to the motor, a temperature such as a temperature of the motor, a rotational speed of the motor, a torque applied to the shaft by the motor, a position of a switch such as a trigger switch, or a combination thereof.

According to a preferred embodiment, the first variable is at least one of an algebraic sign, derivative, integral, duration of the first parameter or the change of the first parameter or the first parameter itself or a combination thereof. According to a preferred embodiment, the second variable is at least one of an algebraic sign, derivative, integral, duration of the second parameter or the change of the second parameter or the second parameter itself or a combination thereof.

According to a preferred embodiment, the repetitive actions include using elements each having a parameter, and wherein the method comprises assessing the parameter of an element used during a recognized one of the repetitive actions. The element may be a consumable used in the method, such as a screw or drill. More preferred, the parameter is at least one of a type, size, length, width, depth, diameter, material or hardness of the element used or a combination thereof.

According to a preferred embodiment, the method further comprises increasing a count variable by one each time an occurrence of one of the repetitive actions is recognized. In this way, accurate counting the repetitive actions is enabled. More preferred, the machine comprises a data storage such as a computer memory and the count variable is stored in the data storage.

According to a preferred embodiment, the motor comprises an internal sensor provided for determining the first physical parameter and/or the second physical parameter. According to another preferred embodiment, the controller continuously derives the first physical parameter and/or the second physical parameter from control data present in the controller.

According to a preferred embodiment, the machine comprises a communication unit such as a wireless transmitter capable of communicating information on recognized occurrence of the repetitive actions such as the number of the repetitive actions as recognized during a relevant time of use to an external device.

According to a preferred embodiment, the machine is a screwing tool, capable of directly or indirectly transmitting a torque at a rotational speed to a screw fastener.

According to a further aspect, the invention relates to a hand-held power tool. The components of the tool are substantially surrounded by a machine housing, for protecting the various components against the surrounding environment. The housing includes a motor, typically an electromotor and preferably a brushless electromotor. The motor drives a rotary shaft, capable of directly or indirectly transmitting a torque at a rotational speed to a workpiece penetrating element. Throughout the present application, "directly or indirectly transmitting" is meant to include the case where a rotary shaft as driven by the motor transmits torque and rotational speed to a workpiece penetrating element via other intermediate elements. The skilled person will appreciate that there may be various types of transmissions between a rotary shaft of a motor and the screw bit of an automatic screw driving tool, for example.

The housing further includes a controller for controlling the motor and continuously determining the delivered torque and rotational speed of the rotary shaft when the tool is in use. Throughout the present application, "continuously determining" is meant to include semi-continuous sampled measurements, with an appropriate sample rate, which the skilled person will know how to choose, depending on the application.

When the tool is in use, the controller uses at least some of the determined delivered torque vs. time and rotational speed vs. time data for identifying the number of times that the tool was used for enabling a workpiece penetrating action by a workpiece penetrating element during a relevant time of use. In other words, the controller does not only use information about the delivered torque at a certain time, but it also uses the information about the rotational speed during the same period of time. With that combined information, workpiece penetrating actions can be more reliably detected, in order to be subsequently counted, for example.

Throughout the present application, "current that is drawn by the motor" is meant to include a measured current running through the motor and/or the current as supplied to the motor by the controller. Throughout the present application, "current that is applied to the motor" is meant to include current that is measured within a power supply, such as a battery, if the hand-held power tool is a battery-operated tool.

Throughout the present application, "substantially within the same time window" is meant to include the case where there is a relatively small time shift between the determined drop/increase of RPM and drop/increase of delivered torque. The skilled person will appreciate that even if such time shifts exist, the controller can be designed to take such time shifts into account and to still correctly correlate a certain drop/increase of RPM and drop/increase of delivered torque. The combined "time window" is then meant to include both overlapping time windows.

Throughout the present application, "remains substantially between a predetermined lower value and a predetermined upper value" is meant to include the case where there may be noise or artifacts in the determined delivered torque or RPM. The skilled person will appreciate that instead of using "raw data", it is possible to use some kind of filter, such as, in the simplest imaginable way, a moving average filter, in order not to let such noise or artifacts go beyond a predetermined lower value and upper value, thereby influencing an identification of a workpiece penetrating action.

Furthermore, the skilled person will appreciate that "predetermined thresholds", "predetermined upper values" and "predetermined lower values" will need to be fixed, keeping in mind, first of all, the type of hand-held power tool for which the number of enabled workpiece penetrating actions is to be identified. Obviously, the type of tool determines generally how high the average torque to be delivered is and at what average rotational speed this torque is delivered. Also, the typical deviation from these average values during a workpiece penetrating action will vary from tool to tool, but the skilled person will know, or will be able to determine from a limited number of experiments, how large these deviations typically are for a given tool, which will allow them then subsequently to fix the above-mentioned "predetermined thresholds", "predetermined upper values" and "predetermined lower values".

Furthermore, even though it is said "fixed" above, it should be appreciated that a given tool can obviously have different operational modes, corresponding to several different average delivered torque and average RPM combinations, each having their typical deviations corresponding to a workpiece penetrating action by a workpiece penetrating element. The skilled person will appreciate that in that case, the above-mentioned "predetermined thresholds", "predetermined upper values" and "predetermined lower values" should be adapted according to the corresponding operational modes, so that in that case, "fixed" should be understood as fixed with respect to the operational mode at hand.

### BRIEF DESCRIPTION OF THE DRAWINGS

Further aspects and advantages of the machine, associated parts and a method of use thereof will become apparent from the ensuing description that is given by way of example only and with reference to the accompanying drawings in which:
- Fig. 1: shows a machine,
- Fig. 2: shows an exemplary characteristic of two physical parameters over time,
- Fig. 3: shows another exemplary characteristic of two physical parameters over time,
- Fig. 4: shows another characteristic of two physical parameters over time,
- Fig. 5: shows another characteristic of two physical parameters over time, and
- Fig. 6: shows another characteristic of two physical parameters over time.

### DETAILED DESCRIPTION

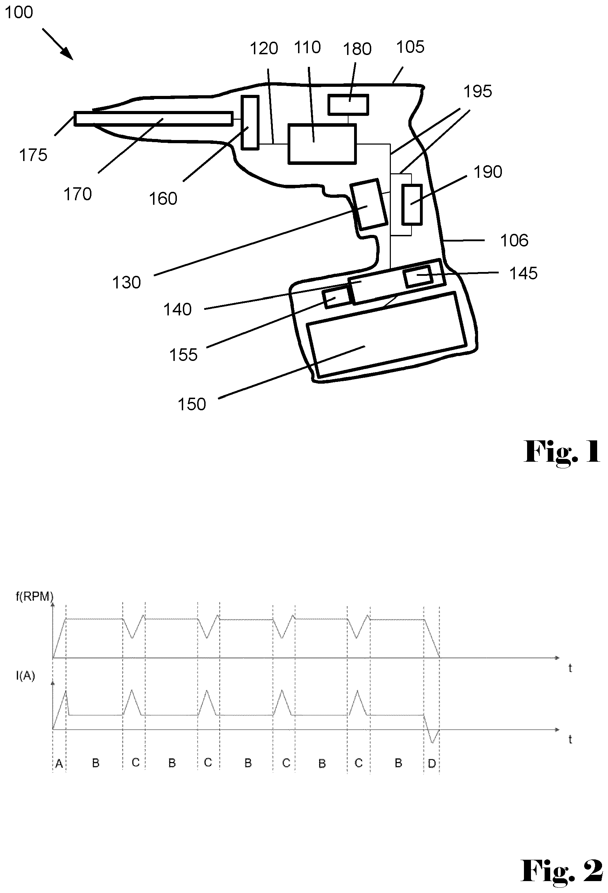

Fig. 1 shows a machine 100 for performing repetitive actions. In the embodiment shown, the machine 100 is formed as a hand-held working tool such as an automatic screwdriver. The repetitive actions may be drilling holes or setting screws into a workpiece. The machine 100 comprises a housing 105 and, enclosed by the housing 105, a motor 110 having a shaft 120, a switch 130 formed as a trigger switch, a controller 140 formed as a microcomputer and having a data storage 145 formed as a computer memory, a battery 150, and a communication unit 155 formed as a wireless transmitter. The controller 140 provides electric current from the battery 150 to the motor 110 to rotationally drive the shaft 120. The machine 100 further comprises a gear 160 and a spindle 170 having a screw drive 175 such as a hex drive and driven by the shaft 120 via the gear 160.

Further, the machine 100 comprises a rotational-speed sensor 180 for detecting a rotational speed of the motor 110 and an amperage/voltage sensor 190 for detecting an amperage and/or voltage of the electric current provided to the motor 110. Further, the machine 100 comprises lines 195 which connect the controller 140 with the motor 110, the switch 130 and sensors 180, 190 for transmitting electric current to the motor 110 and/or collecting electric signals from the switch 130 and/or sensors 180, 190. Additionally, or alternatively, to acquire data on the rotational speed, amperage or voltage of the motor 110, the controller 140 may use information already present from its controlling a rotational movement of the motor 110, for example the number of electrical commutations over time for the rotational speed. The housing 105 comprises a grip section 106 for manually gripping the machine 100 by a user such that the switch 130 can be pressed by the user's index finger. The switch 130 is capable of signaling its switch position to the controller 140 via the lines 195.

Fig. 2 shows a characteristic of a first physical parameter f(RPM) (upper curve) and a second physical parameter I(A) (lower curve) over time t, as continuously determined by the controller 140 shown in Fig. 1. In the following, the first physical parameter f(RPM) exemplary represents the rotational speed of the motor 110 at a respective point in time. However, the first physical parameter may be any physical parameter related to a motion of the motor 110, such as an amperage or voltage of the electric current provided to the motor 110, a temperature of the motor 110, a torque applied to the shaft 120 by the motor 110, a position of the switch 130, or a combination thereof. Likewise, the second physical parameter I(A) exemplary represents the amperage of the electric current provided to the motor 110 or drawn from the battery 150 at a respective point in time. However, the second physical parameter may be any physical parameter related to a motion of the motor 110, such as a voltage of the electric current provided to the motor 110 or drawn from the battery 150, a temperature of the motor 110, a torque applied to the shaft 120 by the motor 110, a position of the switch 130, or a combination thereof.

As shown in Fig. 2, immediately after switching on the motor 110 by the controller 140, the motor 110 and the first and second physical parameters f(RPM), I(A) undergo a switch-on phase A in which the first physical parameter f(RPM) steadily rises from zero to an idle level and in which the second physical parameter I(A) steadily rises from zero to a maximum level and immediately thereafter falls to an idle level. Then, the motor 110 and the first and second physical parameters f(RPM), I(A) go over to an idle phase B in which the first and second physical parameters f(RPM), I(A) stay at their respective idle levels. Each time one of the repetitive actions is performed, the idle phase B is interrupted by a repetitive-action phase C in which the first physical parameter f(RPM) first falls to a minimum level and then rises back to the idle level, possibly with a small overshoot, and in which the second physical parameter I(A) first rises to a maximum level and thereafter falls back to the idle level, likewise possibly with a small overshoot (not shown). In the exemplary embodiment, a screw may be set into a workpiece during one of the repetitive-action phases C. Penetration of the workpiece by the screw increases the torque delivered by the motor 110 which causes the amperage of the motor to increase and the rotational speed of the motor to decrease. When the machine 100 is switched off or the controller 140 switches off the motor 110, the motor 110 and the first and second physical parameters f(RPM), I(A) undergo a switch-off phase D in which the first physical parameter f(RPM) steadily falls to zero and in which the second physical parameter I(A) falls to a negative level, i.e. changes its algebraic sign, and immediately thereafter goes back to zero.

As is apparent from Fig. 2, the first and second physical parameters f(RPM), I(A) change during the switch-on phase A, each repetitive-action phase C and the switch-off phase D. In order to recognize an occurrence of one of the repetitive actions, the controller 140 identifies each change of the first physical parameter f(RPM) and determines a first variable f' related to the change of the first physical parameter f(RPM). According to an embodiment, the first variable f' exemplary represents a derivative of the first physical parameter f(RPM) over time t. However, the first variable may be any variable related to the change of the first physical parameter f(RPM), such as an algebraic sign, integral, duration of the first parameter or the change of the first parameter or the first parameter itself or a combination thereof. Likewise, the controller 140 identifies each change of the second physical parameter I(A) and determines a second variable I' related to the change of the second physical parameter I(A). According to an embodiment, the second variable I' exemplary represents a derivative of the second physical parameter I(A) over time t. However, the second variable I' may be any variable related to the change of the second physical parameter I(A), such as an algebraic sign, integral, duration of the second parameter or the change of the second parameter or the second parameter itself or a combination thereof.

The controller 140 recognizes an occurrence of one of the repetitive actions if the first variable f' is in a first prescribed range such as below zero and, at the same time, the second variable I' is in a second prescribed range such as above zero. While the first variable f' is below zero during repetitive-action phase C and switch-off phase D only, the second variable I' is above zero during switch-on phase A and repetitive-action phase C only. Accordingly, an occurrence of one of the repetitive actions is recognized only in each repetitive-action phase C, as opposed to a system or method which considers only a single physical parameter and which might erroneously recognize one of the repetitive actions also in switch-on phase A or switch-off phase D. Considering the first and second variables at the same time thus enables more accurate recognition of the occurrence of the one of the repetitive actions, without erroneously recognizing tool ramp-ups, empty trigger pressing etc.

In order to count the repetitive actions, the controller 140 provides for a count variable, increases the count variable by one each time an occurrence of one of the repetitive actions is recognized, and stores the count variable in the data storage 145. The number of the repetitive actions recognized during a relevant time of use, or any other information on recognized occurrence of the repetitive actions, may be communicated, or transmitted by cable or wirelessly such as by WIFI, Bluetooth, NFC to an external device such as a central computer system by the communication unit 155. Such a communication may be triggered manually by a user of the machine 100, or automatically by the machine 100, for example within regular time intervals.

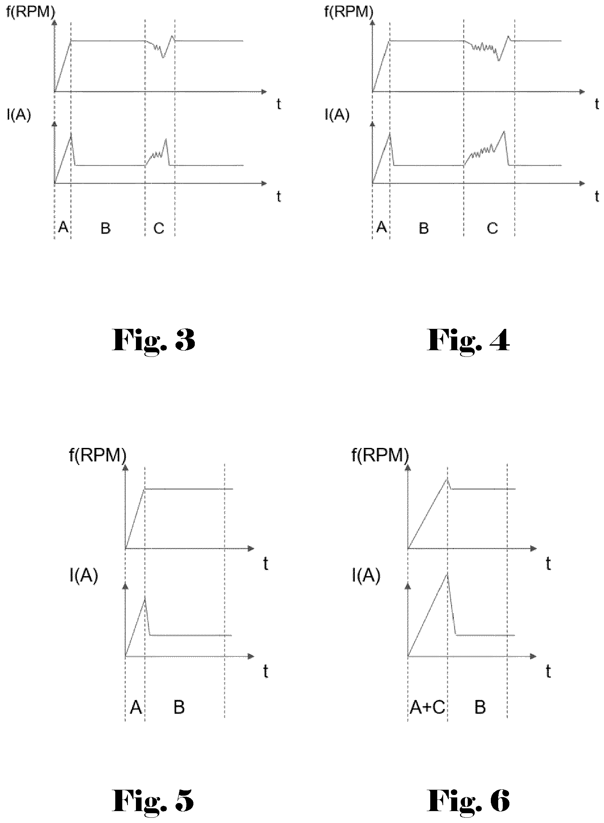

Figs. 3 and 4 each show a characteristic of a first physical parameter f(RPM) (upper curve) and a second physical parameter I(A) (lower curve) over time t, as continuously determined by the controller 140 shown in Fig. 1. In an exemplary embodiment, the first physical parameter f(RPM) represents the rotational speed of the motor 110 at a respective point in time, and the second physical parameter I(A) represents the amperage of the electric current provided to the motor 110 at a respective point in time. Further, in the exemplary embodiment, a first element, or consumable such as a screw having a parameter such as a length may be set into a workpiece during the repetitive-action phase C shown in Fig. 3, and a second element, or consumable such as a screw having a parameter such as a length different from the first consumable may be set into a workpiece during the repetitive-action phase C shown in Fig. 4. However, the parameter may be any parameter related to the first and second elements, such as a type, size, width, depth, diameter, material or hardness of the first and second elements or a combination thereof.

As is apparent from Figs. 3 and 4, the first and second physical parameters f(RPM), I(A) behave differently during the repetitive-action phase C related to the first element (Fig. 3) and the repetitive-action phase C related to the second element (Fig. 4). In order to assess the parameter of the first and second elements used during a recognized one of the repetitive actions, the controller 140 determines the different behavior of the first and second physical parameters f(RPM), I(A) during each repetitive-action phase C. In the embodiment shown, the change of each of the first and second physical parameters f(RPM), I(A) for the second element (Fig. 4) differs in its duration and/or its magnitude if compared to the first element (Fig. 3). As an example, if the first and second elements are screws of different length, a setting the elements into a workpiece may take longer and/or generate a higher torque and/or reduction of rotational speed for the longer screw than for the shorter screw. In this way, the machine 100 is capable of distinguishing between different elements and may even count the number of repetitive actions with different elements separately. In a non-shown embodiment, the machine is in a similar way capable of distinguishing between different materials and/or different thickness of the workpiece.

Figs. 5 and 6 each show a characteristic of a first physical parameter f(RPM) (upper curve) and a second physical parameter I(A) (lower curve) over time t, as continuously determined by the controller 140 shown in Fig. 1. In an exemplary embodiment, the first physical parameter f(RPM) represents the rotational speed of the motor 110 at a respective point in time, and the second physical parameter I(A) represents the amperage of the electric current provided to the motor 110 at a respective point in time. Further, in the exemplary embodiment, the motor 110 is switched on without any further action during the switch-on phase A shown in Fig. 5, wherein an element, or consumable such as a screw may be set into a workpiece at switching on the motor 110 during the combined switch-on and repetitive-action phase A+C shown in Fig. 6.

As is apparent from Figs. 5 and 6, the first and second physical parameters f(RPM), I(A) behave differently during the switch-on phase A (Fig. 5) and during the combined switch-on and repetitive-action phase A+C (Fig. 6). In order to recognize an occurrence of one of the repetitive actions during the combined switch-on and repetitive-action phase A+C shown in Fig. 6, but not during the switch-on phase A shown in Fig. 5, the controller 140 determines the different behavior of the first and second physical parameters f(RPM), I(A) during each of the phases A and A+C, respectively. In the embodiment shown, the change of each of the first and second physical parameters f(RPM), I(A) for the combined switch-on and repetitive-action phase A+C shown in Fig. 6 differs in its duration, its gradient over time and/or its magnitude if compared to the switch-on phase A shown in Fig. 5. In this way, the machine 100 is capable of distinguishing between tool ramp-ups with and without repetitive actions and may more accurately count the number of repetitive actions.

The foregoing description of exemplary embodiments of the invention have been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. A method for running a machine to perform repetitive actions, wherein the machine comprises a motor having a shaft, the method comprising:
- providing electric current to the motor to rotationally drive the shaft;
- continuously determining a first physical parameter related to a motion of the motor;
- identifying a change of the first physical parameter;
- determining a first variable related to the change of the first physical parameter;
- continuously determining a second physical parameter related to a motion of the motor;
- identifying a change of the second physical parameter;
- determining a second variable related to the change of the second physical parameter;
- recognizing an occurrence of one of the repetitive actions if the first variable is in a first prescribed range and, at the same time, the second variable is in a second prescribed range.

2. A method according to claim 1, wherein the first physical parameter is at least one of an amperage, a voltage, a temperature, a rotational speed, a torque, a position of a switch, or a combination thereof.

3. A method according to any of the preceding claims, wherein the second physical parameter is at least one of an amperage, a voltage, a temperature, a rotational speed, a torque, a position of a switch, or a combination thereof.

4. A method according to any of the preceding claims, wherein the first variable is at least one of an algebraic sign, derivative, integral, duration of the first parameter or the change of the first parameter or the first parameter itself or a combination thereof.

5. A method according to any of the preceding claims, wherein the second variable is at least one of an algebraic sign, derivative, integral, duration of the second parameter or the change of the second parameter or the second parameter itself or a combination thereof.

6. A method according to any of the preceding claims, wherein the repetitive actions include using elements each having a parameter, and wherein the method comprises assessing the parameter of an element used during a recognized one of the repetitive actions.

7. A method according to claim 6, wherein the parameter is at least one of a type, size, length, width, depth, diameter, material or hardness of the element used or a combination thereof.

8. A method according to any of the preceding claims, further comprising increasing a count variable by one each time an occurrence of one of the repetitive actions is recognized.

9. A machine for performing repetitive actions, comprising:
- a motor having a shaft;
- a switch;
- a controller providing electric current to the motor to rotationally drive the shaft, continuously determining a first physical parameter related to a motion of the motor, identifying a change of the first physical parameter, determining a first variable related to the change of the first physical parameter, continuously determining a second physical parameter related to a motion of the motor, identifying a change of the second physical parameter, determining a second variable related to the change of the second physical parameter, and recognizing an occurrence of one of the repetitive actions if the first variable is in a first prescribed range and, at the same time, the second variable is in a second prescribed range.

10. A machine according to claim 9, wherein the first physical parameter is at least one of an amperage, a voltage, a temperature, a rotational speed, a torque, a position of the switch, or a combination thereof.

11. A machine according to any of claims 9 and 10, wherein the second physical parameter is at least one of an amperage, a voltage, a temperature, a rotational speed, a torque, a position of the switch, or a combination thereof.

12. A machine according to any of claims 9 to 11, wherein the first variable is at least one of an algebraic sign, derivative, integral, duration of the first parameter or the change of the first parameter or the first parameter itself or a combination thereof.

13. A machine according to any of claims 9 to 12, wherein the second variable is at least one of an algebraic sign, derivative, integral, duration of the second parameter or the change of the second parameter or the second parameter itself or a combination thereof.

14. A machine according to any of claims 9 to 13, wherein the repetitive actions include using elements each having a parameter, and wherein the method comprises assessing the parameter of an element used during a recognized one of the repetitive actions.

15. A machine according to claim 14, wherein the parameter is at least one of a type, size, length, width, depth, diameter, material or hardness of the element used or a combination thereof.
